# EUROPEAN PATENT APPLICATION

(11) **EP 3 550 524 A1**
(43) Date of publication of application: **09.10.2019**
(21) Application number: 16925583.3
(22) Date of filing: 28.12.2016
(51) Int. Cl.: G06T 19/00

(54) **COMPUTER PROGRAM, DISPLAY DEVICE, HEAD WORN DISPLAY DEVICE, AND MARKER**

(71) Applicant: MegaHouse Corporation, Tokyo 111-0043 (JP)
(72) Inventor: HAMA, Takaaki, Tokyo 111-0043 (JP)
(74) Representative: Beder, Jens
(86) International application number: PCT/JP2016/089106
(87) International publication number: WO 2018/123022

(57) **Abstract**

From a moving image obtained by capturing a marker, a change of a shape of an image region of the marker is detected. A shape of a display image is controlled in accordance with the change and a display screen of the display apparatus is caused to display the display image after the controlling.

## Description

### TECHNICAL FIELD

The invention relates to a computer program, a display apparatus, a head-mounted display apparatus, and a marker.

### BACKGROUND ART

An HMD (head mounted display) is one type of apparatus for experiencing a virtual space. A user can wear the HMD on their head to observe a video image of a virtual space that is presented before their eyes. For example, PTL1 discloses a technique for executing specific processing corresponding to an orientation of an operation unit, along with displaying an image corresponding to the orientation of the head of an operator on a head-mounted display worn on the head.

### CITATION LIST

### PATENT LITERATURE

PTL1: Japanese Patent No. 5944600

### SUMMARY OF INVENTION

### TECHNICAL PROBLEM

In the technique disclosed by PTL1, a motion sensor for detecting motion of the head of an operator is used in order to display an image corresponding to an orientation of the head of the operator. The present invention provides, with simple processing using a captured image, a technique for causing an image in accordance with a position or an orientation of the head of an operator to be displayed, even if such a motion sensor is not used.

### SOLUTION TO PROBLEM

An embodiment of the invention causes a computer of a display apparatus to function as detection means for detecting, from a moving image obtained by capturing a marker, a change of a shape of an image region of the marker, and display control means for controlling a shape of a display image in accordance with the change detected by the detection means and causing a display screen of the display apparatus to display the display image after the controlling.

### ADVANTAGEOUS EFFECTS OF INVENTION

By virtue of a configuration of the invention, with simple processing using a captured image, it is possible to cause an image in accordance with a position or an orientation of a head of an operator to be displayed, even if a motion sensor is not used.

Further features and advantages of the present invention will become apparent from the following description with reference to the attached drawings. Note, in the accompanying drawings, the same reference numerals are added for same or similar configuration elements.

### BRIEF DESCRIPTION OF DRAWINGS

The accompanying drawings, which are incorporated in and constitute a part of the specification, illustrate embodiments of the invention and, together with the description, serve to explain the principles of the invention.
FIG. 1A is a view for describing an HMD.
FIG. 1B is a view for describing the HMD.
FIG. 2 is a block diagram illustrating an example of a hardware configuration of a display apparatus 101 and an HMD main body portion 102.
FIG. 3 is a view for describing a marker.
FIG. 4A is a view illustrating a captured image that includes a marker.
FIG. 4B is a view illustrating a captured image that includes a marker.
FIG. 4C is a view illustrating a captured image that includes a marker.
FIG. 4D is a view illustrating a captured image that includes a marker.
FIG. 5A is a view that illustrates a display image.
FIG. 5B is a view that illustrates a display image.
FIG. 5C is a view that illustrates a display image.
FIG. 5D is a view that illustrates a display image.
FIG. 6 is a flow chart of processing that the display apparatus 101 performs.

### DESCRIPTION OF EMBODIMENTS

Below, explanation will be given for embodiments of the present invention with reference to the accompanying drawings. Note that the embodiments to be described below are examples of detailed implementation of the present invention or detailed examples of the arrangement described in the claims.

### [First Embodiment]

In the present embodiment, a display image (may be a still image, may be a moving image, and may be both of these) is displayed on a display screen of an HMD, but a shape of the display image is controlled in accordance with a change of a shape of a marker that is provided on a wall surface and is in a captured image captured by a camera provided in the HMD. In the following description, it is assumed that "shape" includes the meanings of both "outer shape" and "size".

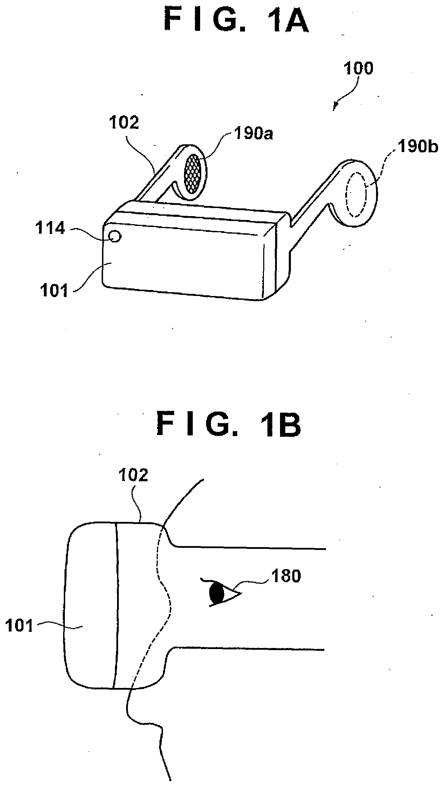

Firstly, FIGS. 1A and 1B are used to give a description regarding an HMD according to the present embodiment. FIG. 1A is a view illustrating an example of an outer appearance of an HMD 100 according to the present embodiment. As illustrated by FIG. 1A, the HMD 100 according to the present embodiment has a display apparatus 101 and an HMD main body portion 102.

The display apparatus 101 is a device that has a display screen which is capable of displaying text or an image based on data that it holds or is received from an external unit, and for the display apparatus 101, it is possible to apply a smart phone, a tablet terminal device, or the like, for example. Reference numeral 114 denotes a camera, and it captures a moving image of a physical space. The display screen of the display apparatus 101 is provided on a surface opposite to a surface to which a camera 114 is attached.

The HMD main body portion 102 is a device to which it is possible to attach the display apparatus 101 so that the display screen of the display apparatus 101 is positioned before the eyes of a user who wears the HMD 100. Reference numerals 190a and 190b in the HMD main body portion 102 denote speakers for outputting audio to a right ear and a left ear, respectively, of a user who wears the HMD 100.

An example of wearing the HMD 100 is illustrated in FIG. 1B. As in FIG. 1B and as described above, the display apparatus 101 is attached to the HMD main body portion 102 so that the display screen of the display apparatus 101 is positioned in front of an eye 180 of a user.

Note that FIGS. 1A and 1B illustrate major configurations related to the following description for the HMD 100, and illustration of a belt for fixing the HMD 100 to the head of a user, or an adjustment knob for adjusting a length of the belt, or the like, for example, is omitted.

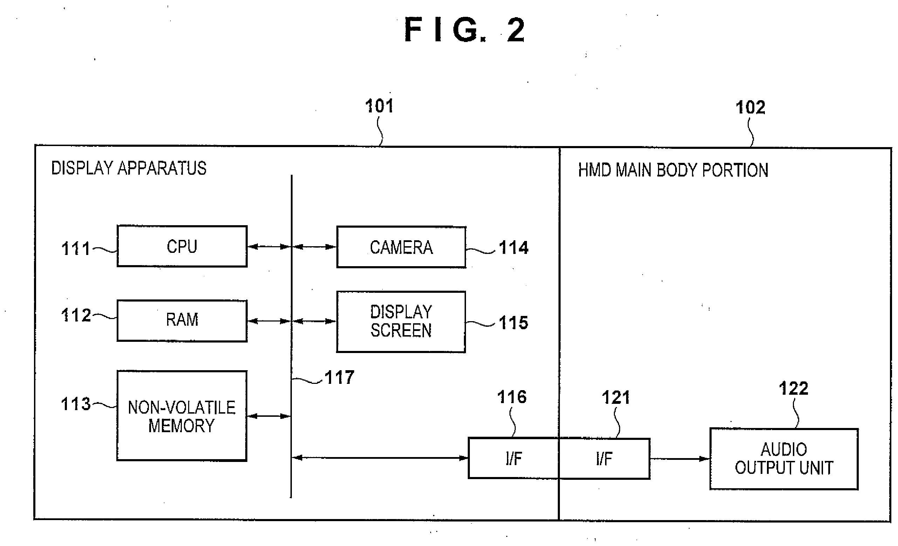

Next, description is given using the block diagram of FIG. 2, regarding an example of a hardware configuration of the display apparatus 101 and the HMD main body portion 102. Note that the configuration illustrated in FIG. 2 is an example of a configuration that enables realization of the various processes described below as something that the display apparatus 101 and the HMD main body portion 102 perform, in the following description.

Firstly, description is given regarding an example of the hardware configuration of the display apparatus 101.

A CPU 111 uses a computer program and data stored in a RAM 112 to perform operation control of the entirety of the display apparatus 101 and to execute or control various processing that is described later as something that the display apparatus 101 performs.

The RAM 112 has an area for storing a computer program and data which are loaded from a non-volatile memory 113, and a work area used when the CPU 111 executes various processing. Furthermore, it also has an area for storing a computer program or data received from an external device if the display apparatus 101 is a device capable of data communication with an external device. In this way, the RAM 112 can appropriately provide various areas.

An OS (operating system), and computer programs and data for causing the CPU 111 to execute or control various processing described later as something the display apparatus 101 performs are saved in the non-volatile memory 113. A computer program for detecting a region of a marker in a captured image, a display image reproducing program, an audio reproducing program, and the like are included in the computer programs saved in the non-volatile memory 113. In addition, data of a display image, audio data, information handled as known information in the following description, and the like is included in the data saved in the non-volatile memory 113. Note that, if the display apparatus 101 is a device that is capable of data communication with an external device, the above-described various programs and data or the like may be received from the external device and saved in the non-volatile memory 113.

The computer programs and data saved in the non-volatile memory 113 are appropriately loaded to the RAM 112 in accordance with control by the CPU 111, and become a target of processing by the CPU 111.

The camera 114 is something attached to a surface that is opposite to that of a display screen 115 in the display apparatus 101, and captures a moving image of a physical space. An image (a captured image) of each frame is outputted from the camera 114, and the outputted captured image is saved to the non-volatile memory 113.

The display screen 115 is configured by a liquid crystal screen, a touch panel screen, or the like, and is capable of displaying a result of processing by the CPU 111 with an image, text, or the like.

An I/F (interface) 116 is an interface for output of audio to the HMD main body portion 102, and, as described later, is configured so that data communication with an I/F 121 on a side of the HMD main body portion 102 is possible. Data communication between the I/F 116 and the I/F 121 may be wireless communication and may be wired communication.

The CPU 111, the RAM 112, the non-volatile memory 113, the camera 114, the display screen 115, and the I/F 116 are each connected to a bus 117.

Next, description is given regarding an example of the hardware configuration of the HMD main body portion 102.

The I/F 121 is an interface for receiving an audio signal outputted from the display apparatus 101 via the I/F 116 and sending the received audio signal to an audio output unit 122, and is configured so that data communication with the I/F 116 described above is possible.

The audio output unit 122 is something for outputting an audio signal received from the I/F 121 as audio. The audio output unit 122 includes the above-described speaker 190a for a right ear and speaker 190b for a left ear, and outputs audio based on audio signals with respect to respective speakers.

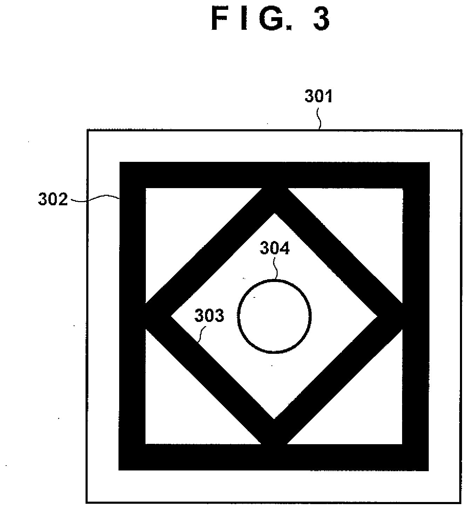

Next, description using FIG. 3 is given regarding a marker described above. A marker 301 of FIG. 3 is a sheet in which, inside a rectangular (for example, square) frame 302, a frame 303 resulting from shrinking the frame 302 and rotating it by a defined angle (90 degrees in FIG. 3) is arranged to be inscribed in the frame 302, and a defined mark 304 is arranged inside the frame 303. The marker 301 illustrated in FIG. 3 may be provided in a physical space by any method, so long as it is fixedly arranged in the physical space. For example, the marker 301 may be pasted to a wall surface, and may be hung from a ceiling. In addition, an image of the marker 301 may be displayed on a display screen that is provided on a wall surface or hung from a ceiling. In addition, the configuration of a marker that can be used in the present embodiment is not limited to the configuration illustrated in FIG. 3.

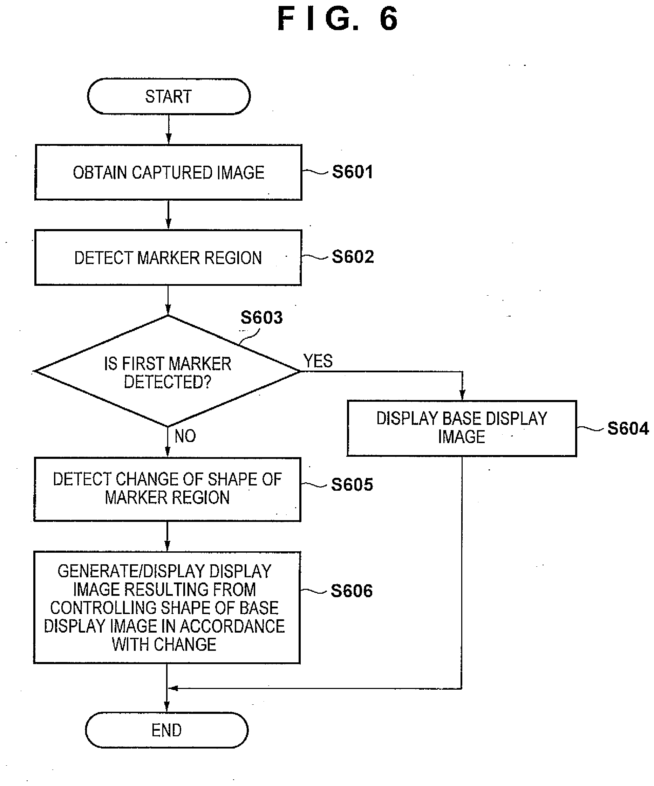

Next, a flow chart of FIG. 6 is used to give a description regarding processing performed by the CPU 111 in order to display a display image on the display screen 115 of the display apparatus 101. Note that processing in accordance with the flow chart of FIG. 6 is processing for causing a display image for one frame to be displayed on the display screen 115. Thus, the CPU 111 repeatedly perform the processing in accordance with the flow chart of FIG. 6 to thereby can cause the display screen 115 to display display images for a plurality of frames.

In step S601, the CPU 111 obtains a captured image (a captured image of an Nth frame) outputted from the camera 114, and saves the obtained captured image in the non-volatile memory 113.

In step S602, the CPU 111 detects, as a marker region, an image region in which the marker 301 is appearing in the captured image of the Nth frame (the captured image of the current frame) obtained in step S601. There are various techniques for a technique for detecting a marker region from a captured image, and, in this step, any technique may be used to detect the marker region from the captured image. For example, a recognition model that has learned the marker in advance may be used to detect, as a marker region, an image region of the marker from the captured image, and, by a pattern matching technique, an image region from the captured image that most matches an image of the marker may be detected as a marker region.

In step S603, the CPU 111 determines whether or not the captured image obtained in step S601 is a captured image for which a marker region was first detected after activation of the display apparatus 101. As a result of this determination, if the captured image obtained in step S601 is a captured image for which a marker region was first detected after activation of the display apparatus 101, the processing proceeds to step S604, and if the captured image obtained in step S601 is a second or subsequent captured image for which a marker region was detected after activation of the display apparatus 101, the processing proceeds to step S605.

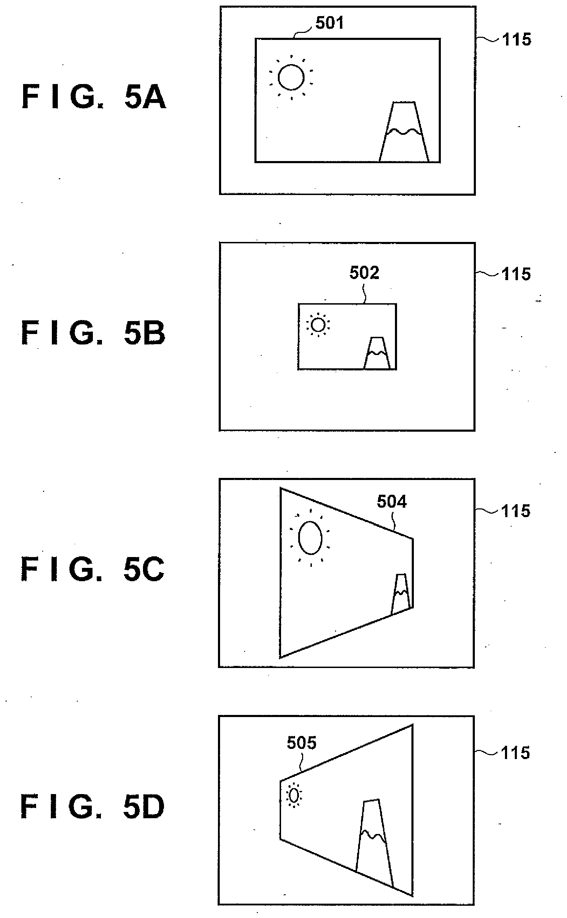

In step S604, the CPU 111 stores in the RAM 112 the marker region detected in step S602, in other words shape information defining a shape of the marker region first detected after activation of the display apparatus 101. The shape information is image coordinates of four corners of the marker region in the captured image, for example. Furthermore, the CPU 111 displays a display image having a base shape (may be referred to as a base display image) on the display screen 115. For the description below, description is given for a display image 502 illustrated in FIG. 5B being displayed on the display screen 115 as a base display image when the captured image obtained in step S601 is a captured image for which a marker region was first detected after activation of the display apparatus 101. A "base display image" referred to in this example corresponds to a "rectangular display image having a base size".

Meanwhile, in step S605, the CPU 111 detects a change from the shape indicated by the shape information stored in the RAM 112 in step S604 to a shape of the marker region detected in step S602 for the captured image of the Nth frame.

In step S606, the CPU 111 controls the shape of the base display image in accordance with the change of the shape obtained in step S605 to generate a new display image, and causes the display screen 115 to display the generated display image.

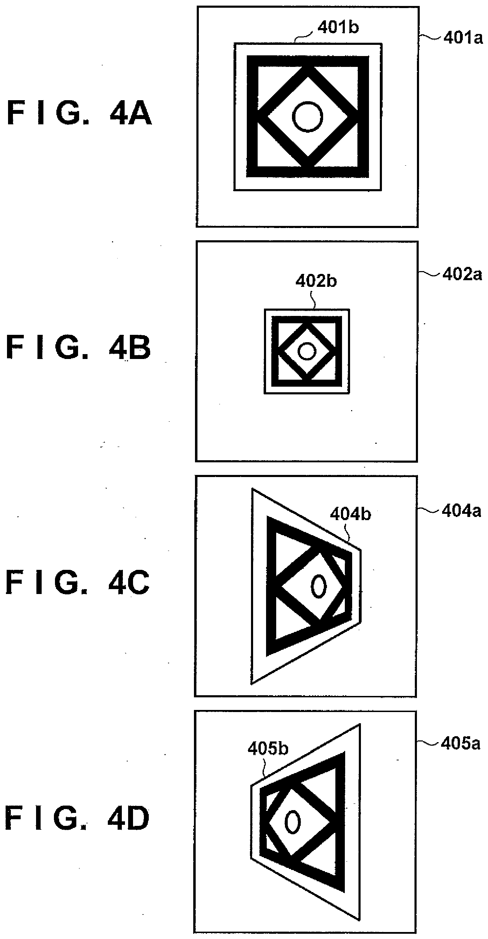

Here, the processing in step S605 and step S606 is described by taking FIGS. 4A to 4D and 5A to 5D as examples.

FIGS. 4A to 4D illustrate the example of various ways the marker 301 appears in a captured image. How the marker 301 appears in a captured image changes in accordance with a distance between the camera 114 and the marker 301, a relationship between a normal direction of the surface of the marker 301 and an optical axis direction of the camera 114, and the like.

For example, assume that, by capturing the marker 301 from in front at a position separated by a distance d1 in the normal direction of the marker 301 from the position of the marker 301, a captured image 401a of FIG. 4A is obtained. In the captured image 401a, the marker 301 appears as a marker 401b having an appropriate size.

Here, when the marker 301 is captured from in front at a position separated by a distance d2 (d2 > d1) in the normal direction of the marker 301 from the position of the marker 301, as illustrated by FIG. 4B, a captured image 402a in which a marker 402b, which is of a size smaller than that of the marker 401b, appears is obtained.

In addition, when a position separated from the position of the marker 301 by a distance d1 in the normal direction of the marker 301 is set as a position P, when the marker 301 is captured from a position separated from the position P by an appropriate distance to the left when facing the marker 301, as illustrated in FIG. 4C, a captured image 404a in which a marker 404b whose left side and right side are, respectively, longer than the left side of the marker 401b and shorter than the right side of the marker 401b appears is obtained.

In addition, when the marker 301 is captured from a position separated from the position P by an appropriate distance to the right when facing the marker 301, as illustrated by FIG. 4D, a captured image 405a in which a marker 405b whose left side and right side are, respectively, shorter than the left side of the marker 401b and longer than the right side of the marker 401b appears is obtained.

In this way, in accordance with a positional relationship between the marker 301 and the camera 114, the appearance of the marker 301 in a captured image changes. In the present embodiment, when a marker region is first detected from a captured image after activation of the display apparatus 101, a base display image (here the display image 502) is displayed on the display screen 115, irrespective of the shape of the detected marker region. In other words, when FIGS. 4A to 4D are taken as examples, even if the marker region first detected from a captured image after activation of the display apparatus 101 is an image region of one of the markers 401b, 402b, 404b, and 405b, the base display image is displayed irrespective of the shape of the marker region. If a marker region is then detected from the captured image of the Nth frame which is a subsequent frame, change from the shape indicated by the shape information to the shape of this marker region is obtained, and a new display image, in which the shape of the display image 502 is controlled in accordance with the obtained change, is generated and displayed.

For example, assume that a captured image in which a marker region was first detected after activation of the display apparatus 101 is the captured image 402a of FIG. 4B. In such a case, the shape indicated by shape information is the shape of the marker 402b. At this time, assume that the display image 502 is displayed on the display screen 115 as a base display image.

Subsequently, assume that the captured image 401a is obtained as the captured image of the Nth frame. In this case, a change from the shape of the marker 402b to the shape of the marker 401b is obtained. There are various methods for a method of obtaining the shape change, but an example thereof is given here. Firstly, image coordinates of the four corners of the marker 401b in the captured image 401a are obtained. A coordinate conversion parameter (a region transformation parameter for causing the shape of the marker region of the marker 402b to transform to the shape of the marker region of the marker 401b) for conversion from the image coordinates of the four corners of the marker 402b which is indicated by the shape information to the image coordinates of the four corners of the marker 401b is obtained. By using the coordinate conversion parameter to convert the image coordinates of the four corners of the display image 502, a display image 501 into which the display image 502 is transformed is generated, and the display screen 115 is caused to display the generated display image 501. As a result, as illustrated by FIG. 5A, the display image 501, which is obtained by enlarging the display image 502 in accordance with an enlargement factor of the size of the marker 401b with respect to the size of the marker 402b, is displayed on the display screen 115. This is because the size of the marker 401b in the captured image 401a is greater than the size of the marker 402b in the captured image 402a, and, in accordance with this, the display image 501, which is the result of enlarging the display image 502, is displayed.

In addition, in a case where the captured image for which a marker region is first detected after the activation of the display apparatus 101 is the captured image 401a of FIG. 4A, the base display image displayed at that time is the display image 501, and the captured image 402a is obtained as the captured image of the Nth frame, for example, image coordinates of the four corners of the marker 402b in the captured image 402a are obtained, a coordinate conversion parameter for from the image coordinates of the four corners of the marker 401b which are indicated by the shape information to the image coordinates of the four corners of the marker 402b are obtained, the coordinate conversion parameter is used to generate the display image 502 obtained by converting the image coordinates of the four corners of the display image 501, and the display screen 115 is caused to display the generated display image 502.

In addition, in a case where the captured image for which a marker region is first detected after the activation of the display apparatus 101 is the captured image 401a of FIG. 4A, the base display image displayed at that time is the display image 501, and the captured image 404a is obtained as the captured image of the Nth frame, for example, image coordinates of the four corners of the marker 404b in the captured image 404a are obtained, a coordinate conversion parameter for from the image coordinates of the four corners of the marker 401b which are indicated by the shape information to the image coordinates of the four corners of the marker 404b is obtained, the coordinate conversion parameter is used to generate the display image 504 obtained by converting the image coordinates of the four corners of the display image 501, and the display screen 115 is caused to display the generated display image 504. It is similar even if a captured image in which a marker region was first detected after activation of the display apparatus 101 is the captured image 402a of FIG. 4B.

In addition, in a case where the captured image for which a marker region is first detected after the activation of the display apparatus 101 is the captured image 401a of FIG. 4A, the base display image displayed at that time is the display image 501, and the captured image 405a is obtained as the captured image of the Nth frame, for example, image coordinates of the four corners of the marker 405b in the captured image 405a are obtained, a coordinate conversion parameter for from the image coordinates of the four corners of the marker 401b which are indicated by the shape information to the image coordinates of the four corners of the marker 405b is obtained, the coordinate conversion parameter is used to generate the display image 505 obtained by converting the image coordinates of the four corners of the display image 501, and the display screen 115 is caused to display the generated display image 505. It is similar even if a captured image in which a marker region was first detected after activation of the display apparatus 101 is the captured image 402a of FIG. 4B.

By virtue of such a configuration, in a case of performing an image display in accordance with a position and orientation of an HMD (a head), it is possible to perform an image display in accordance with the position and orientation of the HMD (head), in accordance with only change of the shape of a marker region in a captured image, without needing to perform complicated calculation processing such as generating an image from a viewpoint in a virtual three-dimensional space by considering a three-dimensional position and orientation of a marker or information collected using a sensor or the like, where the position and orientation of the HMD is measured using the sensor, as in the past.

### [Second Embodiment]

In the first embodiment, shape information is set as information indicating a shape of a marker region first detected from a captured image after activation of the display apparatus 101, but may be information indicating the shape of a marker region in another frame. For example, information indicating the shape of the marker region detected recently may be set as shape information.

In addition, in the first embodiment, a hand-held display apparatus, a smart phone, and a tablet terminal device may be used instead of an HMD, but regardless of which apparatus, there is a necessity to have a camera that captures a moving image of a physical space.

In addition, in a case of displaying a display image on the display screen 115, an image captured by the camera 114 may be displayed. For example, a display image may be displayed overlapping a marker region on a captured image. Of course, the display position of the display image is not limited to a position that overlaps a marker region.

The present invention is not limited to the embodiments described above, and it is possible to make various modifications or changes without straying from the spirit and scope of the present invention. Therefore, to apprise the public of the scope of the present invention, the following claims are appended.

## Claims

1. A computer program for causing a computer of a display apparatus to function as:
detection means for detecting, from a moving image obtained by capturing a marker, a change of a shape of an image region of the marker; and
display control means for controlling a shape of a display image in accordance with the change detected by the detection means and causing a display screen of the display apparatus to display the display image after the controlling.

2. The computer program according to claim 1, **characterized in that**
the display control means,
in a case where the detection means first detects the image region of the marker from the moving image after activation of the display apparatus, causes the display screen to display a base display image which is a display image that has a base shape.

3. The computer program according to claim 2, **characterized in that**
the display control means,
in accordance with a change from the shape of the image region of the marker that the detection means first detected from the moving image, generates a display image obtained by changing the shape of the base display image, and causes the display screen to display the generated display image.

4. The computer program according to claim 3, **characterized in that**
the display control means
obtains a parameter representing a change from the shape of the image region of the marker that the detection means first detected from the moving image, generates a display image that is obtained by changing the shape of the base display image using the obtained parameter, and causes the display screen to display the generated display image.

5. The computer program according to any one of claims 1 to 4, **characterized in that** the detection means obtains the moving image from a camera that the display apparatus has.

6. The computer program according to any one of claims 1 to 5, **characterized in that** the display apparatus is a smart phone.

7. A display apparatus, **characterized by** comprising:
detection means for detecting, from a moving image obtained by capturing a marker, a change of a shape of an image region of the marker; and
display control means for controlling a shape of a display image in accordance with the change detected by the detection means and causing a display screen of the display apparatus to display the display image after the controlling.

8. A head-mounted display apparatus having the display apparatus according to claim 7.

9. A marker in which a first rectangle and a second rectangle, which results from shrinking and rotating the first rectangle in order for the second rectangle to be inscribed in the first rectangle, are arranged, wherein a defined mark is arranged in the second rectangle.
